# FASCICULE DE BREVET EUROPEEN

(11) **EP 0 834 716 B1**
(45) Date de publication et mention de la délivrance du brevet: **05.12.2001**
(21) Numéro de dépôt: 97402159.4
(22) Date de dépôt: 18.09.1997
(51) Int. Cl.: F42B 3/04, F42B 3/12

(54) **Microgénérateur pyrotechnique de gaz à prise bifilaire bloquée**
Pyrotechnischer Mikrogasgenerator mit zweiadriger festgehaltener Dose
Pyrotechnic gas microgenerator with locked bifilar socket

(30) Priorité: 01.10.1996 FR 9611924
(43) Date de publication de la demande: 08.04.1998
(73) Titulaire: S.n.c. Livbag, 91710 Vert Le Petit (FR)
(72) Inventeur: Perotto, Christian, 91610 Ballancourt (FR); Duvacquier, Daniel, 33300 Bordeaux (FR)
(74) Mandataire: Pech, Bernard

(56) Documents cités:
- WO-A-94/01307
- DE-A- 2 745 658
- US-A- 3 991 649
- US-A- 4 422 381
- US-A- 5 542 701

## Description

L'invention concerne un microgénérateur pyrotechnique de gaz à prise bifilaire bloquée permettant un assemblage aisé de ces générateurs utilisables notamment dans le domaine de la sécurité automobile.

Le gonflement de coussins de protection ou la mise sous tension de ceintures de sécurité en cas d'accidents de véhicules automobiles nécessite, compte tenu des temps de réponse très courts exigés des dispositifs de sécurité, l'emploi de générateurs pyrotechniques de gaz.

Ces générateurs pyrotechniques de gaz comprennent essentiellement une composition pyrotechnique génératrice de gaz mise à feu, en cas d'accident, par un initiateur qui transforme le signal fourni par un détecteur de collision en phénomène de combustion.

Ce signal peut être un signal pyrotechnique transmis par un cordeau détonant comme expliqué par exemple dans le brevet DE-A-2 745 658 qui décrit un générateur pyrotechnique comprenant un corps cylindrique terminé par un étui fragmentable cylindrique et contenant une poudre d'allumage, le cordeau pénétrant dans le corps du générateur par un alésage central.

Ce signal peut être un signal électrique et dans ce cas l'initiateur ou microgénérateur comporte deux électrodes, en général cylindriques, situées en bout du générateur et qui viennent se brancher dans une prise reliée par des fils conducteurs au détecteur de collision fournissant l'impulsion électrique.

Les générateurs équipés de tels initiateurs qui sont, par exemple, décrits dans la demande de brevet français 2 730 965, ont l'inconvénient de pouvoir présenter avec le temps de mauvais contacts électriques, notamment par suite des vibrations auxquelles ils sont soumis.

Pour des raisons de sécurité, les constructeurs demandent de plus en plus que le générateur soit équipé d'un initiateur à fils encore appelé initiateur ou microgénérateur bifilaire, de manière à ce que le générateur soit directement branché sur le module de détection de collision en garantissant ainsi le maintien de bons contacts électrique dans le temps.

Pour ce faire il faut que les électrodes de l'initiateur soient fixées, par soudure ou par accrochage, aux fils conducteurs de l'électricité, comme cela est décrit par exemple, dans les brevets US-A-5,345,872 et US-A-5,433,147. Mais cette réponse, en apparence simple, pose de nouveaux problèmes à l'homme de métier pour la fabrication en séries industrielles de générateurs équipés de tels initiateurs.

Industriellement, les générateurs pyrotechniques de gaz sont assemblés en continu sur des chaînes de montage, en général à partir de l'initiateur.

Si la fixation des fils sur les électrodes de l'initiateur est faite en début de chaîne de montage, il faut transporter sur toute la chaîne des générateurs prolongés par des fils qui peuvent avoir plus d'un mètre de long, ce qui n'est pas pratique.

Si la fixation des fils sur les électrodes de l'initiateur est faite en fin de chaîne de montage, ou ultérieurement chez l'équipementier, voire chez le constructeur automobile, cette fixation sera, avec les moyens connus actuellement, externe à l'initiateur et donc au générateur et ne donnera pas toutes les garanties de sécurité souhaitées. Par ailleurs l'homme de métier n'aime pas effectuer des soudures sur un générateur pyrotechnique contenant des matières pyrotechniques actives.

Enfin, qu'elles soient effectuées en début ou en fin de chaîne de montage, les opérations de fixation des fils, ralentissent souvent la cadence de fabrication des générateurs.

L'homme de métier est donc confronté au problème d'arriver à fixer de manière simple et irréversible des fils conducteurs sur les électrodes d'un initiateur pyrotechnique et ce de manière à ce que la fixation soit interne à l'inflammateur ou au générateur de gaz.

Il a récemment été proposé par la demande de brevet français 96.04995 un initiateur à prise bifilaire auto-bloquante dans lequel les électrodes sont prolongées en sortie par des pinces coupantes déformables sous l'action d'une poussée axiale. De telles pinces sont par exemple décrites dans le brevet britannique EP (UK)-B-0 474 113. Une pièce de fermeture encliquetable et portant les fils conducteurs permet la fixation irréversible de ces derniers en fin de chaîne de fabrication.

Cette solution techniquement très satisfaisante est néanmoins limitée aux initiateurs pour lesquels l'arrivée des fils conducteurs se fait parallèlement à l'axe de l'initiateur. L'homme de métier ne dispose pas de solution simple et fiable au problème posé dans le cas des initiateurs ou générateurs pour lesquels on veut une arrivée des fils conducteurs qui soit perpendiculaire à l'axe de révolution de l'initiateur ou du générateur.

L'invention a précisément pour objet de fournir une telle solution à l'homme de métier.

L'invention concerne donc un microgénérateur pyrotechnique de gaz comportant :
i) un support d'allumeur en forme de pièce de révolution comportant un alésage central prolongé par un col cylindrique creux dont l'axe se confond avec l'axe du support d'allumeur,
ii) un corps d'inflammateur en forme de pièce de révolution qui pénètre dans le dit col creux et dans la partie supérieure du dit alésage central située à proximité du dit col, le corps d'inflammateur étant solidarisé au dit support et contenant deux électrodes longitudinales qui le traversent complètement, les extrémités supérieures des dites électrodes étant reliées entre elles par un ensemble pyrotechnique d'allumage tandis que les extrémités inférieures des dites électrodes sont situées à l'intérieur de l'alésage central et sont connectées à un câble comportant deux fils gainés conducteurs de l'électricité,
iii) un étui fragmentable qui prend appui sur le support d'allumeur en enveloppant le dit col ainsi que le dit ensemble d'allumage et qui contient une poudre d'allumage,
caractérisé en ce que :
iv) le dit support d'allumeur comporte une ouverture radiale permettant l'introduction des fils gainés conducteurs et en ce que le dit alésage central présente un dégagement interne,
v) les extrémités inférieures des électrodes comportent chacune au moins une fente à bords coupants parallèle à l'axe du corps d'inflammateur dans laquelle pénètre l'un des fils conducteurs,
vi) une pièce de maintien des électrodes présentant un rebord latéral externe est encliquetée dans le dégagement interne du dit alésage central.

Préférentiellement l'ouverture radiale débouche sur la face d'extrémité du support d'allumeur qui est opposée au dit col creux. Dans cette configuration l'ouverture radiale forme ainsi une rainure permettant l'introduction longitudinale du câble électrique.

Selon une variante de réalisation, l'ouverture radiale correspond uniquement à une perforation qui nécessite l'introduction radiale du câble électrique.

Selon une autre réalisation préférée le dégagement interne est constitué par deux lumières radiales, le rebord latéral externe de la pièce de maintien des électrodes étant constitué par deux pattes épaulées s'encliquetant dans ces lumières. Le dégagement interne peut aussi être constitué par un épaulement de l'alésage central, le rebord latéral externe de la pièce de maintien des électrodes s'étendant sensiblement sur la totalité de la périphérie de cette pièce.

Selon un premier mode préféré de réalisation de l'invention le support d'allumeur présente sur sa paroi latérale externe une gaine d'entrée servant à la réception et à l'immobilisation du câble conducteur de l'électricité. Cette gaine d'entrée aura avantageusement la structure d'une gouttière déformable qui n'est que partiellement solidarisé au support d'allumeur et qui comporte une zone déformable pour permettre dans un premier temps le positionnement du câble et dans un second temps son immobilisation après serrage de la zone déformable autour du câble. Le câble conducteur comprend deux fils conducteurs de l'électricité constitués chacun par une âme métallique conductrice de l'électricité entourée par une gaine isolante.

Selon un second mode préféré de réalisation de l'invention l'extrémité inférieure de chaque électrode comporte deux fentes coupantes alignées l'une derrière l'autre dans un plan de symétrie de l'électrode.

Selon un troisième mode préféré de réalisation de l'invention l'ensemble pyrotechnique d'allumage reliant les extrémités supérieures des électrodes comprend au moins une résistance chauffante et une composition pyrotechnique d'allumage.

Selon un quatrième mode préféré de réalisation de l'invention le corps d'inflammateur est solidarisé au support d'allumeur par sertissage du premier dans le col cylindrique creux du dernier. Avantageusement encore l'étui fragmentable est fixé au support d'allumeur également par sertissage.

Selon un cinquième mode préféré de réalisation de l'invention le corps d'inflammateur contient un noyau de ferrite.

L'invention concerne également un procédé d'assemblage des microgénérateurs faisant l'objet de l'invention selon lequel après avoir assemblé entre eux le support d'allumeur, le corps d'inflammateur comportant les électrodes et l'ensemble d'allumage et l'étui fragmentable contenant la poudre d'allumage, le câble conducteur est placé dans la gaine d'entrée perpendiculairement à l'axe du support d'inflammateur de manière à ce que chaque fil gainé conducteur de l'électricité engagé dans la rainure radiale du support d'allumeur passe au-dessus des fentes présentées par l'une des électrodes, les fils conducteurs sont alors introduits dans les dites fentes dont les bords coupent leur gaine isolante et s'incrustent dans l'âme métallique. La gaine d'entrée est alors serrée autour du câble conducteur pour assurer son immobilisation et la pièce de maintien des électrodes est enfin mise en place.

L'invention permet ainsi à l'homme de métier de disposer d'un micro générateur de gaz bifilaire de structure très simple qui présente une ouverture radiale permettant le positionnement du câble conducteur de l'électricité perpendiculairement à l'axe du microgénérateur. Ce microgénérateur peut être assemblé sur une chaîne de montage en absence du câble conducteur qui peut n'être mis en place qu'en fin d'assemblage. Par ailleurs, après mise en place de la pièce de maintien des électrodes encliquetable dans l'alésage central du support d'allumeur, le microgénérateur ne peut être que très difficilement ouvert et démonté sans rupture du support d'allumeur, ce qui est d'un très grand intérêt au plan de la sécurité.

Un microgénérateur selon l'invention peut être utilisé directement comme générateur de gaz dans un rétracteur de ceinture. Il peut également être utilisé comme dispositif d'allumage dans un générateur plus complexe servant à gonfler un coussin de protection pour occupant d'un véhicule automobile. Dans ce dernier cas l'invention offre l'avantage de permettre la constitution de générateurs pyrotechniques bifilaires pour coussins gonflables présentant une arrivée radiale du câble conducteur qui peut n'être mis en place qu'en fin de chaîne de montage, après assemblage complet du générateur autour de son microgénérateur d'allumage.

On décrit maintenant une réalisation préférée de l'invention en faisant référence aux figures 1 à 3.

La figure **1** représente, vu en perspective, un microgénérateur selon l'invention.

La figure **2** est une vue en perspective du microgénérateur représenté à la figure 1 ouvert selon un plan axial médian.

La figure **3** représenté, vue en perspective, une électrode utilisée pour la réalisation du microgénérateur représenté aux figures 1 et 2.

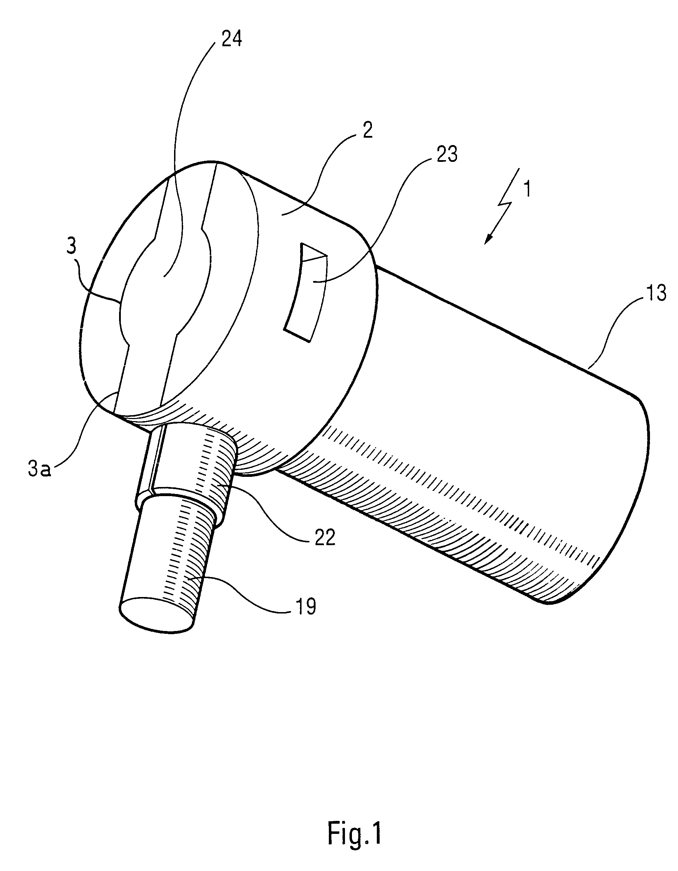

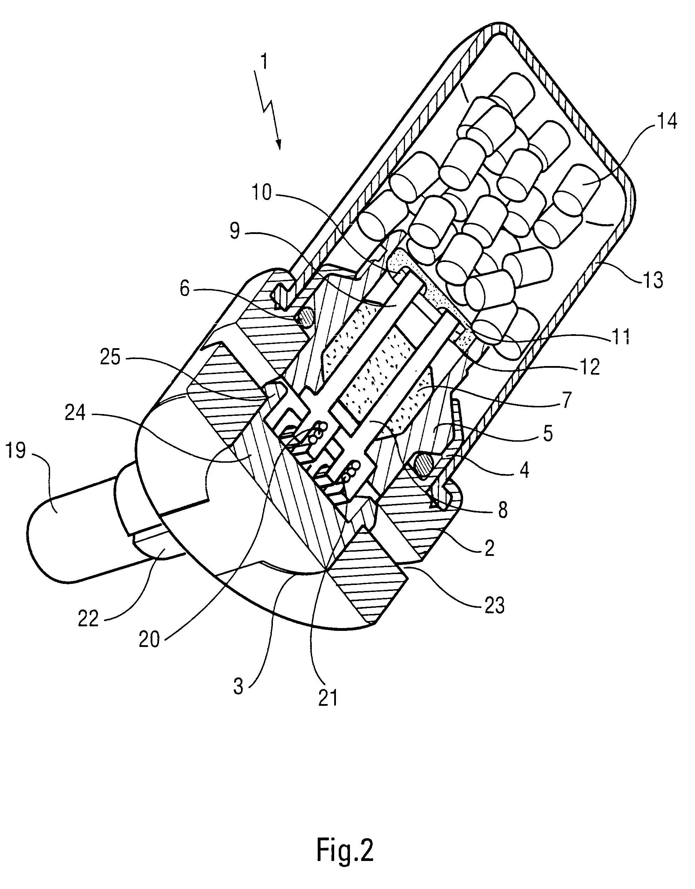

Un microgénérateur 1 selon l'invention a été représenté aux figures 1 et 2.

Ce microgénérateur comprend un support d'allumeur 2 cylindrique comportant un alésage central 3 débouchant sur la surface d'extrémité du support 2 et prolongé par un col cylindrique creux 4 dont l'axe se confond avec l'axe du support 2. Le support d'allumeur 2 est avantageusement constitué par un alliage résistant comme le "zamak".

Un corps d'inflammateur 5 en forme de pièce de révolution présentant une partie médiane élargie pénètre dans le col creux 4 et dans la partie supérieure de l'alésage central 3. Ce corps d'inflammateur 5 repose sur un joint torique d'étanchéité 6 placé au fond du col 4 et est solidarisé au support d'allumeur 2 par sertissage de l'extrémité libre du col 4 sur la partie médiane élargie du corps d'inflammateur 5. Avantageusement, comme représenté sur la figure 2, le corps d'inflammateur 5 contient un noyau de ferrite 7.

Deux électrodes axiales 8 et 9 traversent le corps d'inflammateur 5 sur toute sa hauteur. Les extrémités supérieures des électrodes 8 et 9 débouchent dans la partie supérieure du corps 5 et sont reliées entre elles par un ensemble pyrotechnique d'allumage comprenant une résistance chauffante 10 et une composition pyrotechnique d'allumage 11. Une rondelle réfractaire 12 isole l'ensemble d'allumage du reste du corps d'inflammateur 5.

Les extrémités inférieures des électrodes 8 et 9 débouchent dans la partie inférieure de l'alésage central 3 et seront décrites en détail un peu plus loin.

Un étui cylindrique 13 en métal fragmentable fin comme l'aluminium est fixé par sertissage sur la périphérie supérieure du support d'allumeur 5 de manière à envelopper le col 4 ainsi que l'ensemble d'allumage. Cet étui contient des grains de poudre d'allumage 14 qui sera avantageusement soit une poudre à la nitrocellulose, soit une poudre composite.

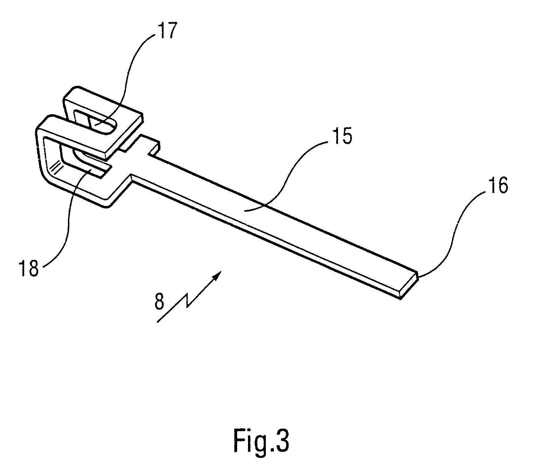

On a représenté à la figure 3 une électrode 8 pouvant être utilisée dans le cadre de l'invention. Cette électrode 8 se compose d'une tige conductrice 15 dont l'extrémité libre 16 correspond à l'extrémité supérieure connectée à l'ensemble d'allumage. L'extrémité opposée, ou extrémité inférieure, est profilée de manière à présenter deux fentes 17 et 18 situées dans un plan de symétrie de l'électrode. Ces fentes 17 et 18 qui présentent des bords coupants sont, après mise en place de l'électrode dans le corps d'inflammateur 5, parallèles à l'axe de ce dernier. De telles électrodes sont, par exemple décrite dans les demandes de brevet européen EP-A-0 002 367 et EP-A-0 045 154.

En se reportant à nouveau aux figures 1 et 2 on observe que les extrémités inférieures des électrodes 8 et 9 sont connectées à un câble 19 comportant deux fils gainés conducteurs de l'électricité 20 et 21, chaque fil pénétrant dans les fentes de l'extrémité inférieure de l'une des électrodes 8 ou 9. Les fentes 17 et 18 de chaque électrode ont une largeur un peu inférieure au diamètre de l'âme métallique conductrice du fil gaine. Lors de l'introduction du fil dans les fentes, la gaine isolante est découpée et refoulée par les bords coupants qui pénètrent dans l'âme métallique conductrice en assurant ainsi un bon contact. Il faut observer que grâce à l'emploi des électrodes qui viennent d'être décrites, les fils gainés contenus dans le câble 19 n'ont pas besoin d'être dénudés avant leur mise en place dans le microgénérateur. Par ailleurs, compte-tenu de l'orientation des fentes, le câble 19 est placé perpendiculairement à l'axe du microgénérateur.

Afin d'améliorer la réception et la fixation du câble 19, le support d'allumeur 2 présente sur sa paroi d'extrémité externe, perpendiculairement à l'alésage 3, une gaine d'entrée 22. Cette gaine d'entrée a un profil radial initial en U et n'est solidarisée au support d'allumeur que dans sa partie arrondie, les deux branches du U étant déformables de façon qu'après cambrage cette gaine d'entrée enserre le câble 19.

L'alésage central 3 présente deux lumières 23 permettant la mise en place d'une pièce de maintien des électrodes 24 présentant deux pattes latérales externes 25 qui sont encliquetées dans ces lumières 23. Par ailleurs la pièce de maintien des électrodes 24 contribue à la qualité de la connexion électrique en maintenant les fils conducteurs 20 et 21 au fond des fentes présentées par les électrodes 8 et 9 en exerçant une pression sur le extrémités de ces fils qui dépassent des dites fentes.

Il est ainsi possible de constituer le microgénérateur 1 en assemblant d'abord le support d'allumeur 2, le corps d'inflammateur 5 comportant les électrodes 8 et 9 ainsi que l'ensemble d'allumage 10 et 11, l'étui fragmentable 13 et la poudre d'allumage 14. Puis on pose le câble 19 dans la gaine d'entrée 22 perpendiculairement à l'axe du corps d'inflammateur 5 de manière à ce que chaque fil conducteur gainé 20 et 21 passe au-dessus des fentes 17 et 18 présentées par chaque électrode 8 ou 9. Les fils gainés 20 et 21 sont alors introduits dans les dites fentes et la gaine d'entré 22 est serrée autour du câble 19. Enfin on met en place la pièce de maintien des électrodes 24.

En cas d'accident, un détecteur de collision ou de décélération brutale va envoyer un signal électrique au travers des fils 20 et 21. Ce signal va passer par les électrodes 8 et 9 en provoquant l'échauffement de la résistance 10 et l'allumage de la composition 11 qui va elle-même allumer les grains de poudre 14. Les gaz de combustion de cette dernière vont provoquer l'éclatement de l'étui 13 et pourront être utilisés soit pour actionner directement un rétracteur de ceinture soit pour allumer un chargement pyrotechnique générateur de gaz destiné à gonfler un coussin de protection pour occupant d'un véhicule automobile.

## Revendications

1. Microgénérateur (1) pyrotechnique de gaz comportant :
1) un support d'allumeur (2) en forme de pièce de révolution comportant un alésage central (3) prolongé par un col cylindrique creux (4) dont l'axe se confond avec l'axe du support,
ii) un corps d'inflammateur (5) en forme de pièce de révolution qui pénètre dans le dit col creux (4) et dans la partie supérieure du dit alésage central (3) située à proximité du dit col, le corps d'inflammateur étant solidarisé au dit support et contenant deux électrodes longitudinales (8,9) qui le traversent complètement, les extrémités supérieures des dites électrodes étant reliées entre elles par un ensemble pyrotechnique d'allumage (10,11) tandis que les extrémités inférieures des dites électrodes sont situées à l'intérieur de l'alésage central (3) et sont connectées à un câble (19) comportant deux fils gainés conducteurs de l'électricité (20,21),
iii) un étui fragmentable (13) qui prend appui sur le support d'allumeur (2) en enveloppant le col (4) ainsi que le dit ensemble d'allumage et qui contient une poudre d'allumage (14),
**caractérisé en ce que** :
iv) le support d'allumeur (2) comporte une ouverture radiale (3a) permettant l'introduction des fils gainés conducteurs et **en ce que** le dit alésage central (3) présente un dégagement interne (23),
v) les extrémités inférieures des électrodes (8,9) comportent chacune au moins une fente (17) à bords coupants parallèle à l'axe du corps d'inflammateur dans laquelle pénètre l'un des fils conducteurs,
vi) une pièce de maintien des électrodes (24) présentant un rebord latéral externe (25) est encliquetée dans le dégagement interne (23) du dit alésage central.

2. Microgénérateur selon la revendication 1 **caractérisé en ce que** l'ouverture radiale (3a) débouche sur la face d'extrémité du support d'allumeur (2).

3. Microgénérateur selon la revendication 1 **caractérisé en ce que** le dégagement interne (23) est constitué par deux lumières radiales, le rebord latéral externe de la pièce de maintien (24) étant constitué par deux pattes épaulées (25) s'encliquetant dans ces lumières.

4. Microgénérateur selon la revendication 1 **caractérisé en ce que** le support d'allumeur (2) présente sur sa paroi latérale externe une gaine d'entrée (22) servant à la réception et à l'immobilisation du câble (19).

5. Microgénérateur selon la revendication 4 **caractérisé en ce que** la gaine d'entrée (22) n'est que partiellement solidarisée au support d'allumeur (2) et comporte au moins une zone déformable.

6. Microgénérateur selon la revendication 4 **caractérisé en ce que** l'extrémité inférieure de chaque électrode comporte deux fentes (17,18) situées dans un plan de symétrie de l'électrode.

7. Microgénérateur selon la revendication 6 **caractérisé en ce que** l'ensemble pyrotechnique d'allumage reliant les extrémités supérieures des électrodes (8,9) comprend au moins une résistance (10) et une composition pyrotechnique d'allumage (11).

8. Microgénérateur selon la revendication 7 **caractérisé en ce que** le corps d'inflammateur (5) est solidarisé au support d'allumeur (2) par sertissage dans le col (4).

9. Microgénérateur selon la revendication 8 **caractérisé en ce que** l'étui fragmentable (13) est fixé par sertissage au support d'allumeur (5).

10. Microgénérateur selon la revendication 9 **caractérisé en ce que** le corps d'inflammateur contient un noyau de ferrite (7).

11. Procédé d'assemblage d'un microgénérateur selon l'une quelconque des revendications 1 à 10 **caractérisé en ce que** :
- après avoir assemblé entre eux le support allumeur (2), le corps d'inflammateur (5) comportant les électrodes (8,9) et l'ensemble d'allumage (10,11), l'étui fragmentable (13) et la poudre d'allumage (14),
- le câble conducteur (19) est placé dans la gaine d'entrée (22) perpendiculairement à l'axe du corps d'inflammateur de manière à ce que chaque fil gainé conducteur de l'électricité engagé dans l'ouverture radiale (3a) du support d'allumeur (2) passe au-dessus des fentes présentées par l'une des électrodes, les fils conducteurs sont alors introduits dans les dites fentes, la gaine d'entrée (22) est serrée autour du câble (19) et la pièce de maintien des électrodes (24) est enfin mise en place.

## Patentansprüche

1. Pyrotechnischer Mikrogasgenerator (1), der aufweist:
i) einen Zündverteilerträger (2) in Form eines drehsymmetrischen Bauteils, das eine zentrale Bohrung (3) aufweist, die von einem hohlen zylindrischen Hals (4) verlängert wird, dessen Achse mit der Achse des Trägers zusammenfällt,
ii) einen Zünderkörper (5) in Form eines drehsymmetrischen Bauteils, das in den hohlen Hals (4) und den oberen Bereich der zentralen Bohrung (3) eindringt, der sich in der Nähe des Halses befindet, wobei der Zünderkörper fest mit dem Träger verbunden ist und zwei längs verlaufende Elektroden (8, 9) enthält, die ihn vollständig durchqueren, wobei die oberen Enden der Elektroden miteinander über eine pyrotechnische Zündeinheit (10, 11) verbunden sind, während die unteren Enden der Elektroden sich innerhalb der zentralen Bohrung (3) befinden und mit einem Kabel (19) verbunden sind, das zwei stromleitende, umhüllte Drähte (20, 21) aufweist,
iii) eine zerbrechliche Kapsel (13), die auf dem Zündverteilerträger (2) aufliegt, indem sie den Hals (4) und die Zündeinheit umgibt, und die ein Zündpulver (14) enthält,
**dadurch gekennzeichnet, daß**
iv) der Zündverteilerträger (2) eine radiale Öffnung (3a) aufweist, die die Einführung der umhüllten Leiterdrähte ermöglicht, und daß die zentrale Öffnung (3) einen inneren Ausschnitt (23) aufweist,
v) die unteren Enden der Elektroden (8, 9) je mindestens einen Schlitz (17) mit schneidenden Rändern parallel zur Achse des Zünderkörpers aufweisen, in den einer der Leiterdrähte eindringt,
vi) ein Halterungsteil (24) für die Elektroden mit einer seitlichen äußeren Randleiste (25) in den inneren Ausschnitt (23) der zentralen Bohrung eingerastet wird.

2. Mikrogenerator nach Anspruch 1, **dadurch gekennzeichnet, daß** die radiale Öffnung (3a) auf der Endfläche des Zündverteilerträgers (2) mündet.

3. Mikrogenerator nach Anspruch 1, **dadurch gekennzeichnet, daß** der innere Ausschnitt (23) aus zwei radialen Langlöchern besteht, während die seitliche äußere Randleiste des Halterungsteils (24) aus zwei mit einem Vorsprung versehenen Laschen (25) besteht, die in diese Langlöcher einrasten.

4. Mikrogenerator nach Anspruch 1, **dadurch gekennzeichnet, daß** der Zündverteilerträger (2) auf seiner äußeren Seitenwand eine Eingangshülse (22) aufweist, die zur Aufnahme und Blockierung des Kabels (19) dient.

5. Mikrogenerator nach Anspruch 4, **dadurch gekennzeichnet, daß** die Eingangshülse (22) nur teilweise fest mit dem Zündverteilerträger (2) verbunden ist und mindestens eine verformbare Zone aufweist.

6. Mikrogenerator nach Anspruch 4, **dadurch gekennzeichnet, daß** das untere Ende jeder Elektrode zwei Schlitze (17, 18) aufweist, die sich in einer Symmetrieebene der Elektrode befinden.

7. Mikrogenerator nach Anspruch 6, **dadurch gekennzeichnet, daß** die die oberen Enden der Elektroden (8, 9) verbindende pyrotechnische Zündeinheit mindestens einen Widerstand (10) und eine pyrotechnische Zündzusammensetzung (11) aufweist.

8. Mikrogenerator nach Anspruch 7, **dadurch gekennzeichnet, daß** der Zünderkörper (5) durch Einpressen in den Hals (4) fest mit dem Zündverteilerträger (2) verbunden ist.

9. Mikrogenerator nach Anspruch 8, **dadurch gekennzeichnet, daß** die zerbrechliche Kapsel (13) durch Einpressen am Zündverteilerträger (5) befestigt ist.

10. Mikrogenerator nach Anspruch 9, **dadurch gekennzeichnet, daß** der Zünderkörper einen Ferritkern (7) enthält.

11. Verfahren zum Zusammenbau eines Mikrogenerators nach einem der Ansprüche 1 bis 10, **dadurch gekennzeichnet, daß**
- nach dem Zusammenbau des Zündverteilerträgers (2), des die Elektroden (8, 9) und die Zündeinheit (10, 11) aufweisenden Zünderkörpers (5), der zerbrechlichen Kapsel (13) und des Zündpulvers (14)
- das Leiterkabel (19) in der Eingangshülse (22) senkrecht zur Achse des Zünderkörpers derart angeordnet wird, daß jeder in die radiale Öffnung (3a) des Zündverteilerträgers (2) eingeführte, umhüllte stromführende Draht oberhalb der Schlitze einer der Elektroden verläuft, wobei die Leiterdrähte dann in die Schlitze eingeführt werden, die Eingangshülse (22) um das Kabel (19) gepreßt und schließlich das Halterungsbauteil (24) der Elektroden eingesetzt wird.

## Claims

1. Pyrotechnic gas microgenerator (1) comprising:
i) an igniter support (2) in the form of a solid of revolution including a central bore (3) extended by a hollow cylindrical neck (4) having the same supporting axis as the support,
ii) a squib body (5) in the form of a solid of revolution which enters the said hollow neck (4) and the upper part of the said central bore (3) situated close to the said neck, the squib body being secured to the said support and containing two longitudinal electrodes (8, 9) which traverse it completely, the upper ends of the said electrodes being linked together by a pyrotechnic ignition assembly (10, 11) while the lower ends of the two electrodes are situated inside the central bore (3) and are connected to a cable (19) having two electrically conducting sheathed wires (20, 21),
iii) a fragmentable case (13) which rests on the igniter support (2) while enveloping the neck (4) as well as the said igniter assembly and which contains an ignition powder (14),
**characterized in that**:
iv) the igniter support (2) includes a radial opening (3a) for the introduction of the sheathed conducting wires and **in that** the said central bore (3) has an internal release (23),
v) each of the lower ends of the electrodes (8, 9) includes at least one slot (17) with cutting edges parallel to the axis of the squib body into which one of the conducting wires enters,
vi) a component for holding the electrodes (24) having an outer lateral edge (25) snaps into the internal release (23) of the said central bore.

2. Microgenerator according to claim 1, **characterized in that** the radial opening (3a) emerges on the end face of the igniter support (2).

3. Microgenerator according to claim 1, **characterized in that** the internal release (23) consists of two radial openings, the outer lateral edge of the holding component (24) consisting of two shouldered lugs (25) snapping into these openings.

4. Microgenerator according to claim 1, **characterized in that** the igniter support (2) has on its outer lateral wall an entry sheath (22) for receiving and immobilizing the cable (19).

5. Microgenerator according to claim 4, **characterized in that** the entry sheath (22) is only partially secured to the igniter support (2) and includes at least one deformable zone.

6. Microgenerator according to claim 4, **characterized in that** the lower end of each electrode includes two slots (17, 18) situated in a plane of symmetry of the electrode.

7. Microgenerator according to claim 6, **characterized in that** the pyrotechnic ignition assembly linking the upper ends of the electrodes (8, 9) includes at least one resistance (10) and a pyrotechnic ignition compound (11).

8. Microgenerator according to claim 7, **characterized in that** the squib body (5) is secured to the igniter support (2) by crimping into the neck (4).

9. Microgenerator according to claim 8, **characterized in that** the fragmentable case (13) is fixed by crimping onto the igniter support (5).

10. Microgenerator according to claim 9, **characterized in that** the squib body contains a ferrite core (7).

11. Process for assembling a microgenerator according to any one of claims 1 to 10, **characterized in that**:
- after having assembled together the igniter support (2), the squib body (5) including the electrodes (8, 9) and the ignition assembly (10, 11), the fragmentable case (13) and the ignition powder (14),
- the conducting cable (19) is placed inside the entry sheath (22) perpendicular to the axis of the squib body so that each electrically conducting sheathed wire engaged in the radial opening (3a) of the igniter support (2) passes above the slots in one of the electrodes, the conducting wires are then introduced into the said slots, the entry sheath (22) is tightened about the cable (19) and the component for holding the electrodes (24) is finally put in place.
